# EUROPÄISCHE PATENTSCHRIFT

(11) **EP 2 316 256 B1**
(45) Veröffentlichungstag und Bekanntmachung des Hinweises auf die Patenterteilung: **06.03.2013**
(21) Anmeldenummer: 10008908.5
(22) Anmeldetag: 27.08.2010
(51) Int. Cl.: A01B 63/11

(54) **Hydropneumatisches Entlastungsssystem für den Fronteinbau an ein Trägerfahrzeug**
Hydropneumatic weight transfer system for attachment to the front of a carrier vehicle
Système de délestage s'adaptant à l'avant d'un vehicule porteur

(30) Priorität: 30.10.2009 DE 102009051398; 06.11.2009 DE 102009052261
(43) Veröffentlichungstag der Anmeldung: 04.05.2011
(73) Patentinhaber: CLAAS Saulgau GmbH, 88348 Bad Saulgau (DE)
(72) Erfinder: Ober, Martin, 78736 Trichtingen (DE)

(56) Entgegenhaltungen:
- DE-A1- 19 624 396
- DE-C1- 4 304 133
- DE-U1- 20 114 538
- DE-U1-202007 015 638

## Beschreibung

Die Erfindung betrifft ein Vorsatz- oder Anbaugerät für den Frontanbau an ein Trägerfahrzeug mit einem hydropneumatischen Entlastungssystemfür ein Trägerfahrzeug zur Minderung des Anteils deren Gewichtskraft, welche auf den Untergrund einwirkt, gemäß dem Oberbegriff des unabhängigen Anspruchs 1.

### Stand der Technik

Bekannt sind Vorsatz- oder Anbaugeräte für den Frontanbau an Trägerfahrzeugen, wie beispielsweise Frontmähwerke mit Entlastungssystemen, zur Minderung des Anteils deren Gewichtskraft, welche während der Arbeitsfahrt auf den Untergrund abgestützt wird und wobei ein Teil der Gewichtskraft auf die Vorderachse des Trägerfahrzeugs abgestützt wird. Dieses dient dazu die Bodenanpassung zu verbessern, die Grasnabe zu schonen und die Vortriebskraft und damit den Treibstoffverbrauch zu mindern. Bekannt sind reine Federentlastungssysteme, aber auch hydropneumatische Entlastungssysteme.

Reine Federentlastungssysteme bestehen aus Zugfedern als Kraftspeicher, die einerseits am Vorsatz- oder Anbaugerät und andererseits am Trägerfahrzeug angeschlagen sind. Diese haben den Nachteil, dass sie nicht steuerbar sind und die verbleibende Gewichtskraft, welche auf den Boden einwirkt von der momentanen Elongation der Zugfedern abhängig ist. Die Entlastungsergebnisse sind in der Praxis sehr unbefriedigend.

Weiterhin sind hydropneumatische Entlastungssysteme als Kraftspeicher bekannt, wobei die Zugfedern durch eine Kombination aus Hydraulikzylinder und hydropneumatischen Druckspeichern ersetzt werden. Dieses hat den Vorteil, dass der Kraftspeicher nicht von Elongationsänderungen abhängig ist und somit eine quasi konstante und entlastungsunabhängige Federkonstante aufweist. Damit ist die verbleibende Restgewichtskraft, welche sich am Boden abstützt, unabhängig von den Bewegungen der Bodenanpassung und damit konstant. Die bekannten Entlastungssysteme stützen sich dabei an einen Überbau, welcher sich über das Frontmähwerk erstreckt, ab, so dass sich das frontseitige Anbaugerät vom Boden abheben lässt ohne dabei das Hubwerk des Dreipunkthubwerks bewegen zu müssen bzw. zu können. Dieses beinhaltet einen erheblichen baulichen Aufwand, der zum Einen das Gesamtgewicht des Frontmähwerks noch erheblich vergrößert und zum Anderen erhebliche Mehrkosten verursacht.

Des Weiteren sind Trägerfahrzeuge, insbesondere Traktoren, mit regelbaren Unterlenkern in Schwimmstellung bekannt, die eine Auftriebskraft zur Entlastung der auf den Boden einwirkenden Gewichtskraft erzeugen können. Da der Anteil dieser Traktoren mit einem derartigen geregelten Hubwerk in der Praxis noch sehr gering ist, ist dieses System insgesamt noch wenig verbreitet, so dass dieses zumindest im Regelfall nicht zur Verfügung steht.

Aus der gattungsbildenden Druckschrift DE 20 2007 015 638 U1 ist ein Trägerfahrzeug gemäß dem Oberbegriff des Anspruches 1 bekannt. Die DE 20 2007 015 638 U1 beschreibt einen Schlepper, an dem an einer Mehrpunktanlenkung ein Mähwerk mit einem Anbaubock anbringbar ist. Zur Gewichtsentlastung ist eine mechanische Federeinrichtung vorgesehen, die das Mähwerk mit nur geringem Gewicht auf den Boden drückt. Die mechanische Federeinrichtung ist im Bauraum der Mehrpunktanlenkung angeordnet. Um die von der mechanischen Federeinrichtung aufgebrachte Entlastungskraft variieren zu können, weist die Federeinrichtung mit den mechanischen Federn verbundene Druckmittelstellglieder auf.

Aus der DE 201 14 538 U1 ist ein Hyrdrauliksystem zur Eigengewichtsentlastung von Anbaugeräten an Trägerfahrzeugen bekannt. Das Hydrauliksystem umfasst eine Kolben-/Zylindereinheit sowie ein Hydrospeichersystem.

### Aufgabenstellung

Hier setzt die Aufgabe der Erfindung an mit dem Ziel, ein vereinfachtes, leichtes und kostengünstiges hydropneumatisches Entlastungssystem vorzuschlagen, welches mit geringem Bauaufwand realisierbar ist, und welches schnell und gefahrlos an und abbaubar ist, und welches zugleich in der Schwimmstellung des Fronthubwerks des Trägerfahrzeugs die Vorteile der hydropneumatischen Gewichtsentlastung ohne einen aufwendigen Regelmechanismus zur Geltung bringt.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Das Vorsatz- oder Anbaugerät für den Frontanbau an ein Trägerfahrzeug mit einem hydropneumatischen Entlastungssystem als Kraftspeicher für die Minderung des Anteils der Gewichtskraft, welche über das Vorsatz- oder Anbaugerät in der Arbeitsstellung am Boden abgestützt wird, weist ein Entlastungssystem 1, bestehend aus einem hydropneumatischen Kraftspeicher 2 mit einer Kolben/Zylindereinheit 3 und einem hydropneumatischen Druckspeicher 4 im Bauraum des Dreipunkthubwerks 30 oberhalb der Unterlenker 21 angeordnet ist und einerseits direkt am Vorsatz- oder Anbaugerät 14 oder dessen Kupplungseinrichtung 39 und anderseits direkt am Trägerfahrzeug 17 angeschlagen ist, auf. Dabei ist die Kolben/Zylindereinheit 3 als Differentialkolbenzylinder ausgebildet und diese ist auf dem kolbenstangenseitige Druckraum durch den eingespannten Druck des hydropneumatischen Druckspeicher 4 druckbeaufschlagbar, welches einen Teil der Gewichtskraft des Vorsatzgerätes auf das Trägerfahrzeug überträgt, während sich der übrige Teil der Gewichtskraft am Boden auf den Gleitkufen des Vorsatzgerätes abstützt.

Ein Vorsatz- bzw. Anbaugerät für den Frontanbau an ein Trägerfahrzeug, insbesondere ein Frontmähwerk, mit einem hydropneumatischen Entlastungssystem für die Minderung des Anteils der Gewichtskraft, welche auf den Untergrund einwirkt, wobei ein Teil der Gewichtskraft auf die Vorderachse des Trägerfahrzeugs abgestützt wird, weist ein Entlastungssystem 1 mit wenigstens einem hydropneumatischen Kraftspeicher 2 mit einer kolbenstangenseitigen druckbeaufschlagbaren Kolben/Zylindereinheit 3 mit einem vorgespannten hydropneumatischen Druckspeicher 4 auf, wobei in die Zugkraftübertragung auf das Trägerfahrzeug ein biegeschlaffes Zugkraftübertragungsglied 5 integriert ist. Die Kolben/Zylindereinheit 3 ist dabei als Differentialkolbenzylinder, der einseitig kolbenstangenseitig druckbeaufschlagt ist, ausgebildet.

Das biegeschlaffe Zugkraftübertragungsglied 5 ist vorzugsweise als Gliederkette 8 ausgebildet.

Das biegeschlaffe Zugkraftübertragungsglied 5 ist Zugkraft übertragend in das hydropneumatische Entlastungssystem integriert, wobei die Kolben/Zylindereinheit 3 einerseits kolbenbodenseitig an einem vorsatzgeräteseitigen als Kugelgelenk ausgebildeten Anschlagpunkt 6 und andererseits kolbenstangenseitig über das biegeschlaffe Zugkraftübertragungsglied 5 an einem festen trägerfahrzeugseitigen Anschlagpunkt 7 gelenkig angeschlagen ist.

Dabei kann das biegeschlaffe Zugkraftübertragungsglied 5 in seiner Abstecklänge 9 veränderbar ausgebildet sein, welches die individuelle Anpassung an verschiedene Trägerfahrzeuge ermöglicht. Einmal eingestellt an ein bestimmtes Trägerfahrzeug braucht die Länge der Gliederkette aber nicht mehr verändert werden. Ebenfalls oder alternativ kann es auch vorgesehen sein, dass Trägerfahrzeugseitig mehrere voneinander beabstandete Anschlagpunkte vorgesehen sind, die ein Verändern der Abstecklänge 9 unnötig machen.

Das biegeschlaffe Zugkraftübertragungsglied 5 ist an seinem freien vorsatzgeräteseitigem Ende 10 mit einem Anschlussglied 11 mit einer schlüssellochförmig ausgebildeten Aufnahmeöffnung 12 zum Einhängen an den trägerfahrzeugseitigen Anschlagpunkt ausgestaltet.

Diese erfinderische Ausgestaltung weist mehrere Vorteile auf, zum einen die Steifigkeit hinsichtlich der relativen Konstanz der Steigung der Federkennlinie eines oder mehrerer zusammenwirkender hydropneumatischer Druckspeicher und zum anderen den einfachen Anbau und die Unterbringung innerhalb des Bauraums 30 des Hubwerks des Trägerfahrzeugs 17 zwischen Vorsatz- bzw. Anbaugerät und Trägerfahrzeug.

Durch die erfinderische Ausgestaltung des hydropneumatischen Kraftspeichers als kolbenstangenseitig druckbeaufschlagbare Kolben/Zylindereinheit 3 in Verbindung mit einem oder mehreren vorgespannten hydropneumatischen Druckspeichern 4 und dem biegeschlaffen Zugkraftübertragungsglied 5 wird die Kolben/Zylindereinheit 3 beim Anheben des Vorsatz- bzw. Anbaugerätes völlig kräftefrei.

Dabei fährt die Kolbenstange der als Differentialzylinder ausgebildeten Kolben/Zylindereinheit 3 im voll ausgehobenen Zustand des Vorsatz- bzw. Anbaugerätes 14 bis auf den Endanschlag in das Zylindergehäuse ein, wobei das biegeschlaffe Zugkraftübertragungsglied 5 dadurch bedingt, dass aufgrund der Anhebung des Vorsatz- bzw. Anbaugerätes vom Boden sich die Anschlagpunkte, der vorsatzgeräteseitige Anschlagpunkt 6 und der trägerfahrzeugseitigen Anschlagpunkt 7, aufeinander zu bewegen, sich der Abstand zwischen diesen verringert, ebenfalls völlig kräftefrei wird. Dieses hat zur Folge, dass dann das biegeschlaffe Zugkraftübertragungsglied 5 durchhängend leicht und gefahrlos an dem trägerfahrzeugseitigen Anschlagpunkt 7 im Falle des an- oder abkoppelns des Vorsatz- bzw. Anbaugerätes 14 ein- oder ausgehängt werden kann.

Somit ist der hydropneumatische Kraftspeicher nach außen gerichtet bis auf die auf Ihn einwirkende Gewichtskraft, hervorgerufen durch sein Eigengewicht, völlig kräftefrei. Damit die Kolben/Zylindereinheit 3 des hydropneumatischen Kraftspeichers im kräftefreien Zustand nicht nach unten wegfällt, wird diese durch eine Zugfeder 28, die aber keinerlei Einfluss auf das eigentliche Entlastungssystem nimmt, in einer Parkposition gehalten. Dazu weist die Kolben/Zylindereinheit einen Anschlagpunkt für eine Zugfeder auf, welche im biegeschlaffen und zugkraftfreien Zustand der Kolben/Zylindereinheit 3 gegen herabfallen sichert.

Diese Ausgestaltung der Erfindung ermöglicht somit eine leichte und gefahrlose Handhabung der Kraftspeicher beim An- und Abbau an das Trägerfahrzeug.

Ein weiterer Vorteil der Erfindung ist das geringe Eigengewicht des Entlastungssystems als Ganzes und dabei zusätzlich die aus der Fahrerkabine heraus einstellbare Gewichtsentlastung auf der Basis der Fernbedienung. Diese kann durch die Variation des Vorspanndrucks des hydropneumatischen Druckspeichers erfolgen. Dieser ist vorzugsweise als handelsüblicher Blasenspeicher mit Stickstofffüllung ausgebildet. Auch ist es möglich, mehrere Blasenspeicher zu einer Batterie als hydropneumatischen Druckspeicher zusammenzufassen, um eben eine möglichst konstante, quasi elongationsfreie Federkennlinie zu erzeugen. Vorgespannt werden kann der hydropneumatische Druckspeicher mit der Bordhydraulik des Trägerfahrzeugs. Ein absperrbares Ventil, beispielsweise ein druckdichter Kugelhahn, kann den Vorspanndruck einspannen, so dass dieser dem hydropneumatischen Entlastungssystem bleibend aufgeprägt wird. Ein Manometer, gut sichtbar vom Fahrersitz aus, zeigt den aufgeprägten Druck an.

Anhand des nachfolgend dargestellten Beispiels soll die Erfindung exemplarisch näher dargestellt und erläutert werden:
- Fig.1: zeigt eine Seitenansicht eines Trägerfahrzeugs mit einem Vorsatz- /Anbaugerät ausgebildet als Frontmähwerk
- Fig.1a: zeigt analog Fig.1 eine Seitenansicht eines Trägerfahrzeugs mit einem Vorsatz-/Anbaugerät ausgebildet als Frontmähwerk in einer anderen Betriebsstellung
- Fig.1b: zeigt analog Fig.1 eine Seitenansicht eines Trägerfahrzeugs mit einem Vorsatz-/Anbaugerät ausgebildet als Frontmähwerk in einer vom Boden abgehobenen Vorgewende- oder Transportstellung
- Fig.2: zeigt einen vergrößerten Ausschnitt der Seitenansicht gemäß Fig.1
- Fig.2a: zeigt die gleiche Ansicht gemäß Fig.2, wobei der Deutlichkeit halber das Frontmähwerk gegenüber allen anderen Bauelementen hervorgehoben dargestellt ist
- Fig.2b: zeigt die gleiche Ansicht gemäß Fig.2, wobei der Deutlichkeit halber das Dreipunkthubwerk des Trägerfahrzeugs gegenüber allen anderen Bauelementen hervorgehoben dargestellt ist.
- Fig.2c: zeigt die gleiche Ansicht gemäß Fig.2, wobei der Deutlichkeit halber der hydropneumatische Kraftspeicher gegenüber allen anderen Bauelementen hervorgehoben dargestellt ist.
- Fig.2d: zeigt die gleiche Ansicht gemäß Fig.2c jedoch mit einer alternativen Ausführung zu einem biegeschlaffen Zugübertragungselement.
- Fig.3: zeigt einen vergrößerten Ausschnitt der Seitenansicht gemäß Fig.1a
- Fig.4: zeigt einen vergrößerten Ausschnitt der Seitenansicht gemäß Fig.1b
- Fig.5: zeigt einen hydraulischen Schaltplan zum Aufprägen oder Ablassen des hydropneumatischen Vorspanndrucks

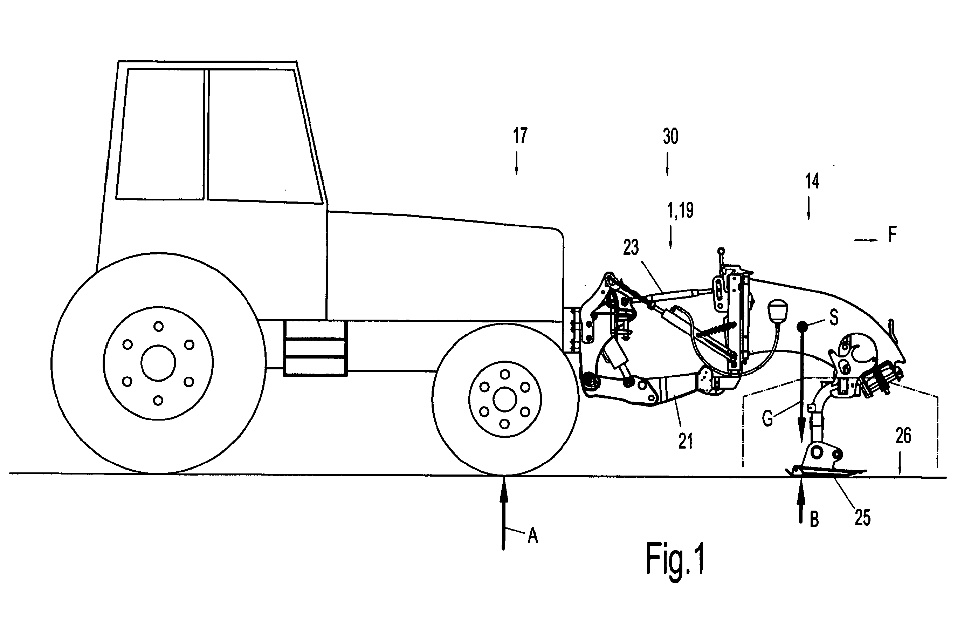

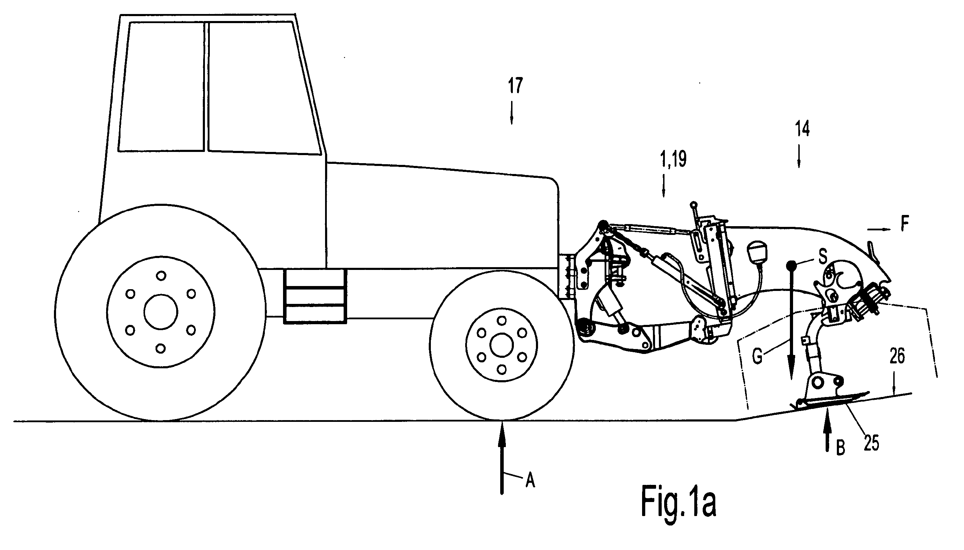

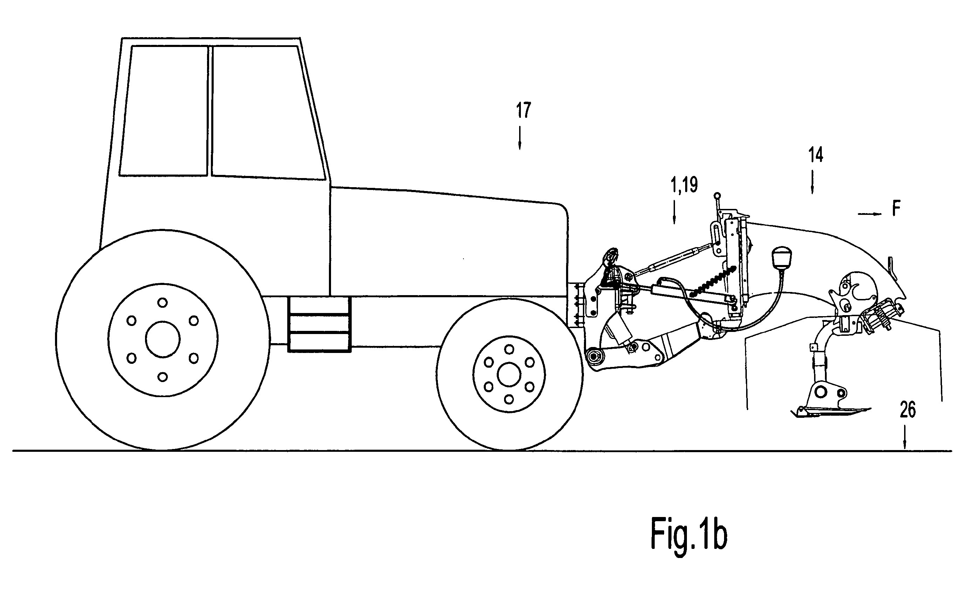

Die Figuren Fig.1 bis Fig. 1b zeigen ein Trägerfahrzeug 17, ausgebildet als Traktor mit einem Fronthubwerk als Dreipunkthubwerk 19, welches ein Vorsatz- bzw. Anbaugerät 14, ausgebildet als Frontmähwerk 14, aufnimmt in einer Seitenansicht.

Fig.1 zeigt eine Arbeitsstellung mit den Gleitkufen 25 am Boden 26 aufliegend auf einer horizontalen Arbeitsebene. Fig.1a zeigt eine Arbeitsstellung, in der das Frontmähwerk einer momentanen Steigung des Bodens während der Bewegung in Fahrtrichtung F folgen muss und Fig. 1b zeigt das Frontmähwerk in einer vom Boden abgehobenen Stellung.

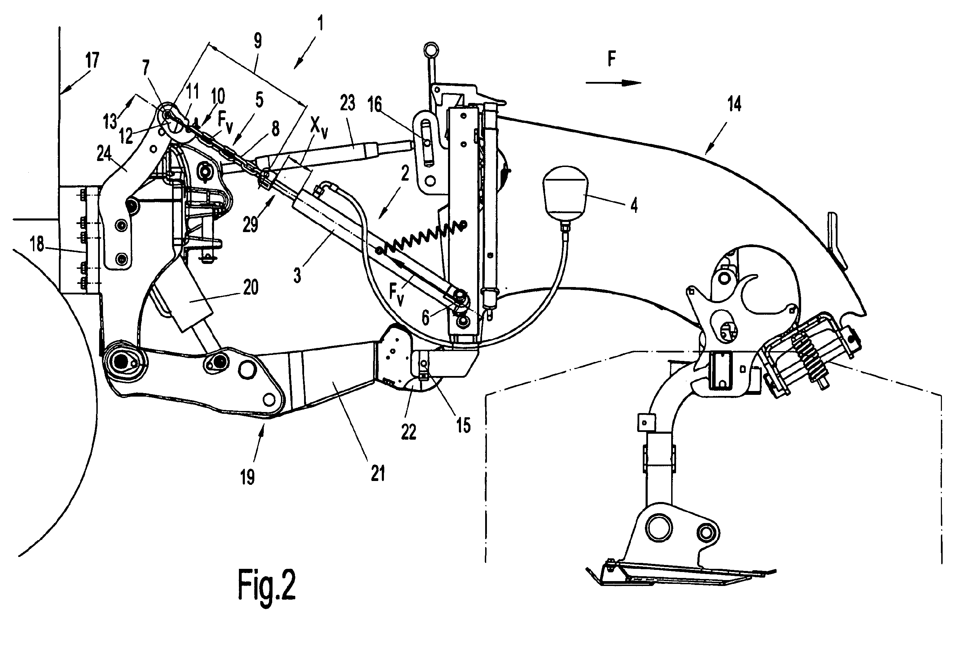

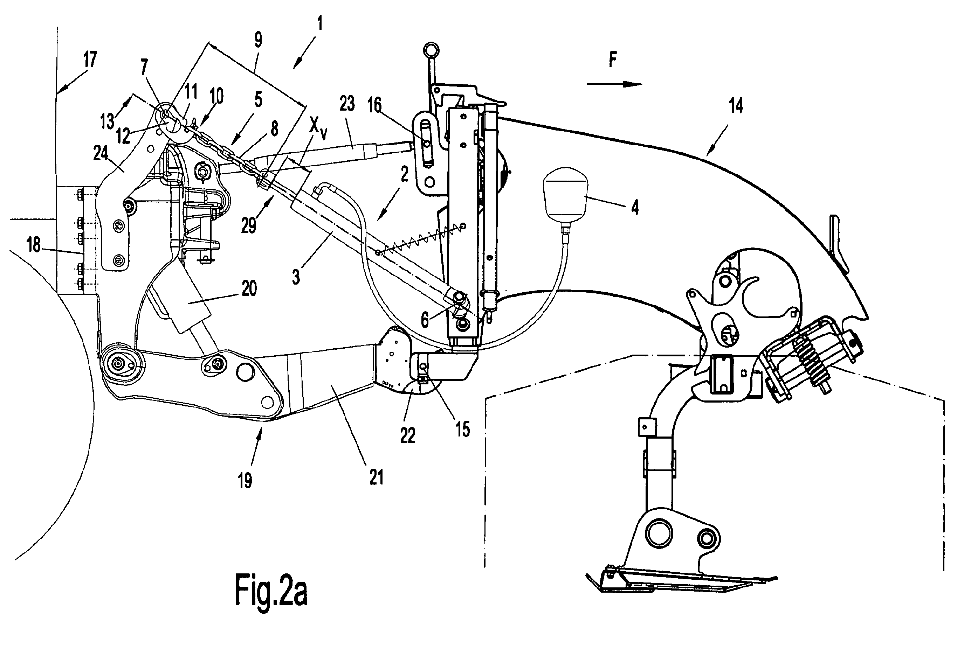

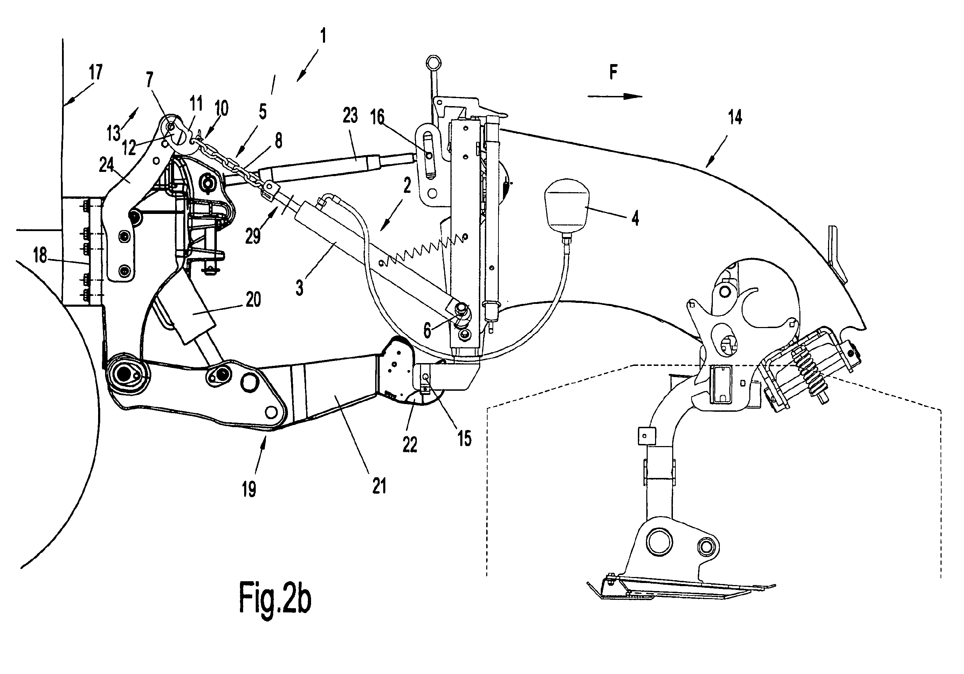

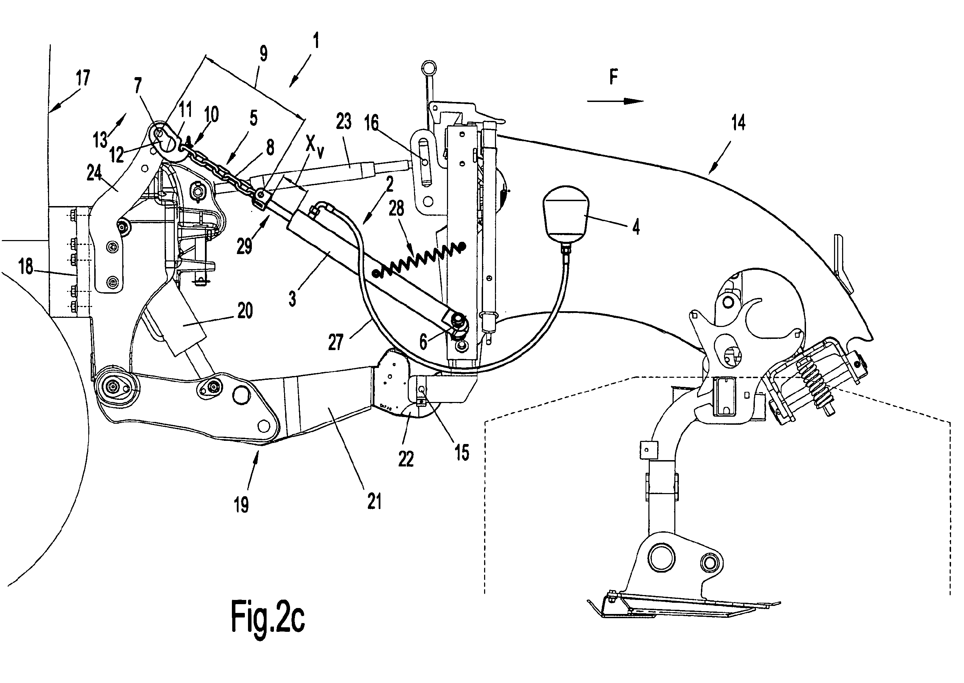

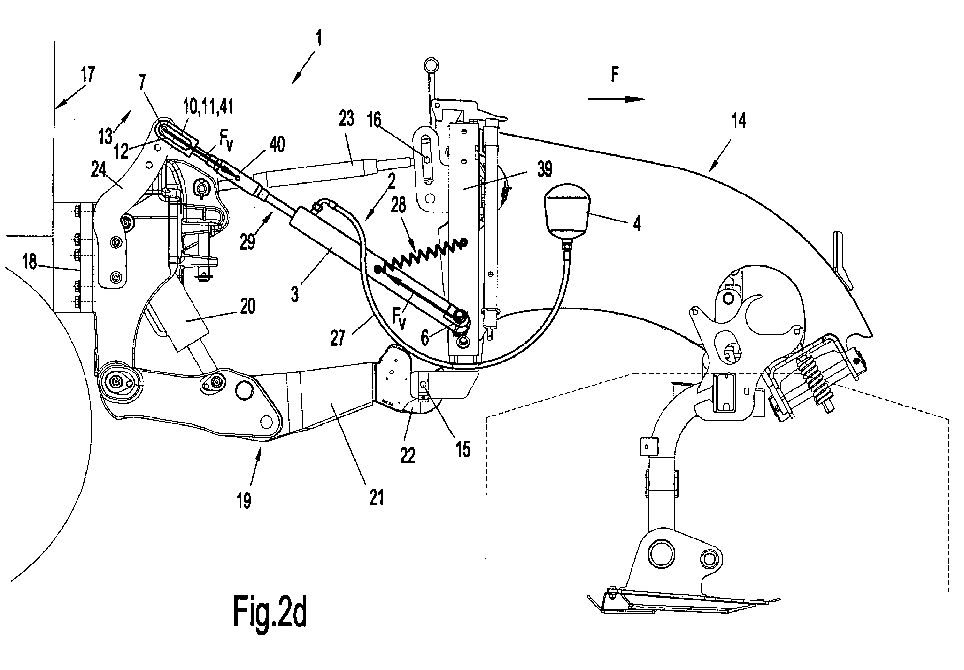

Die Figuren Fig.2 bis Fig. 2c zeigen je einen vergrößerten Ausschnitt der Seitenansicht gemäß Fig.1, wobei Fig. 2a zur besseren Unterscheidung das Mähwerk 14, Fig. 2b das Dreipunkthubwerk 19 und Fig. 2c den hydropneumatischen Kraftspeicher 2 deutlicher durch unterschiedliche Strichstärken hervorheben.

Die Figuren Fig. 2 bis Fig.2c zeigen das Frontmähwerk in der normalen Arbeitsstellung. Das Frontmähwerk 14 wird von den Greifklauen 22 der Unterlenker 21 des Trägerfahrzeugs 17 in den Unterlenkeranschlusspunkten 15 und dem Oberlenkeranschlusspunkt 16 des Dreipunkthubwerks 19 aufgenommen und stützt sich am Boden 26 mit der Bodenstützkraft B auf seinen Gleitkufen 25 ab. Das Dreipunkthubwerk 19 ist mittels einer Flanschverbindung 18 mit dem Trägerfahrzeug 17 verbunden und es kann von dem Hubzylinder 20 betätigt werden. Am starren Teil des Dreipunkthubwerks 19 angeschraubt ist eine ebenso starre Verbindungslasche 24, die den trägerfahrzeugseitigen Anschlagpunkt 7 beinhaltet und an dem das Anschlussglied 11 des biegeschlaffen Zugkraftübertragungsgliedes 5, eingehängt ist.

Innerhalb des Bauraums 30 des Dreipunkthubwerks 19 ist das hydropneumatische Entlastungssystem 1 mit seinen beiden links und rechts des Oberlenkers angeordneten hydropneumatischen Kraftspeichern 2 angeordnet. Die Gewichtskraft G greift im Schwerpunkt S des Frontmähwerks 14 an. Bedingt durch den hydropneumatischen Kraftspeicher 2 des hydropneumatischen Entlastungssystems 1 wirkt nur ein Teil der Gewichtskraft G auf die Gleitkufen 25 als Bodenstützkraft B ein. Der verbleibende Rest der Gewichtskraft G wird über die Vorderachse des Trägerfahrzeugs 17 als Teilachslast A am Boden 26 abgestützt.

Das hydropneumatische Entlastungssystem 1 umfasst im Wesentlichen den hydropneumatischen Kraftspeicher 2, mit, wie zuvor angesprochen, zwei parallel zur Zeichnungsebene hintereinander liegenden Kolben/Zylindereinheiten 3, den dazugehörigen hydropneumatischen Druckspeichern 4, die auch eine Batterie von Druckspeichern sein können, welche mittels flexibler Schlauchleitungen 27 mit dem jeweiligen Kolbenstangendruckraum 31 der Kolben/Zylindereinheiten 3 verbunden sind, und dem sich an der jeweiligen Kolbenstange 29 anschließenden biegeschlaffen Zugkraftübertragungsglied 5, welches als Gliederkette 8 ausgebildet ist. Geräteseitig ist die Kolben/Zylindereinheit 3 in einem Kugelgelenk als vorsatzgeräteseitiger Anschlagpunkt 6 an dem Frontmähwerk 14 angeschlagen. Das biegeschlaffe Zugkraftübertragungsglied 5 befindet sich im Zustand der gestreckten Länge und besitzt die Abstecklänge 9 und es steht unter Einwirkung des hydropneumatischen Vorspanndrucks der Druckspeicher 4 unter der Vorspannkraft Fᵥ.

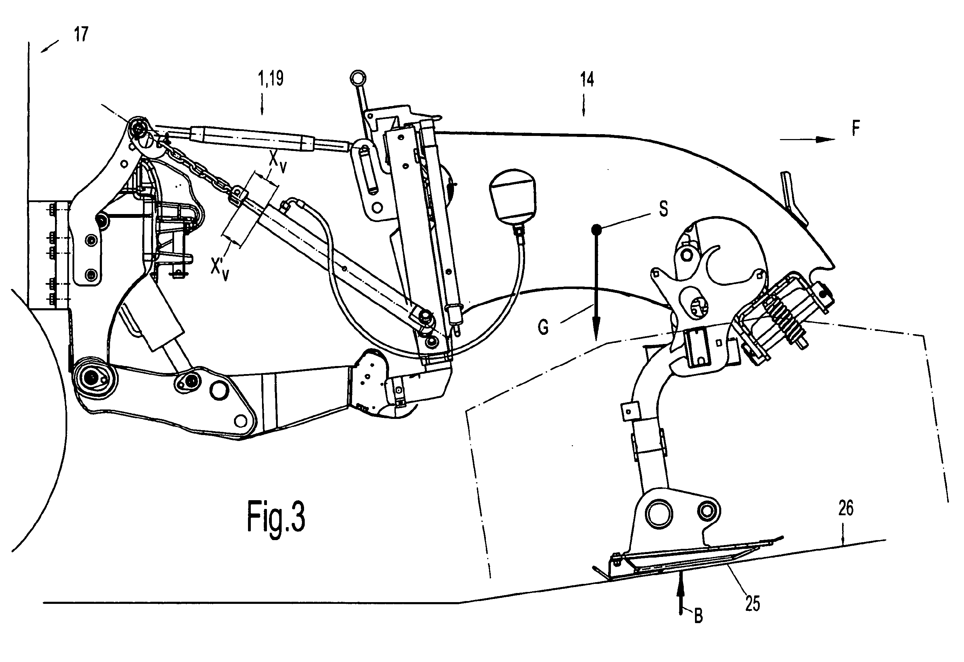

Das biegeschlaffe Zugkraftübertragungsglied 5 in dem dargestellten Ausführungsbeispiel ist in seiner gestreckten Länge so ausgebildet, dass in der normalen Arbeitsstellung, welche durch den plan ebenen Boden 26 definiert ist, die Kolbenstange 29 um ein hinreichendes Maß Xᵥ aus dem Zylindergehäuse 32 ausgefahren ist, so dass der Kolbenstange 29 dabei noch genügend Spiel zur beweglichen Anpassung bzw. Verschiebung innerhalb des Zylindergehäuses 32 zur Bodenanpassung des Frontmähwerks verbleibt. Fig. 3 verdeutlicht dieses erforderliche Spiel insofern, indem sich infolge der Bodenanpassung des Mähwerks das Abstandsmaß Xᵥ auf X'ᵥ verändert hat.

Fig.2d zeigt die gleiche Ansicht gemäß Fig.2c jedoch mit einer alternativen Ausführung zu einem biegeschlaffen Zugübertragungselement. Dabei ist das biegeschlaffe Zugkraftübertragungsglied 5 durch einen Einstellmechanismus, mit einem Langlochglied 41 , welches die Einbaulänge 42 das Entlastungssystem im Sinne der Erfindung variabel macht, ersetzt werden. In besonders vorteilhafter ist dieses Langlochglied 41 noch durch einen Einstellmechanismus, ausgebildet als Verstellspindel 40 mit Links- Rechtsgewinde ausgestattet.

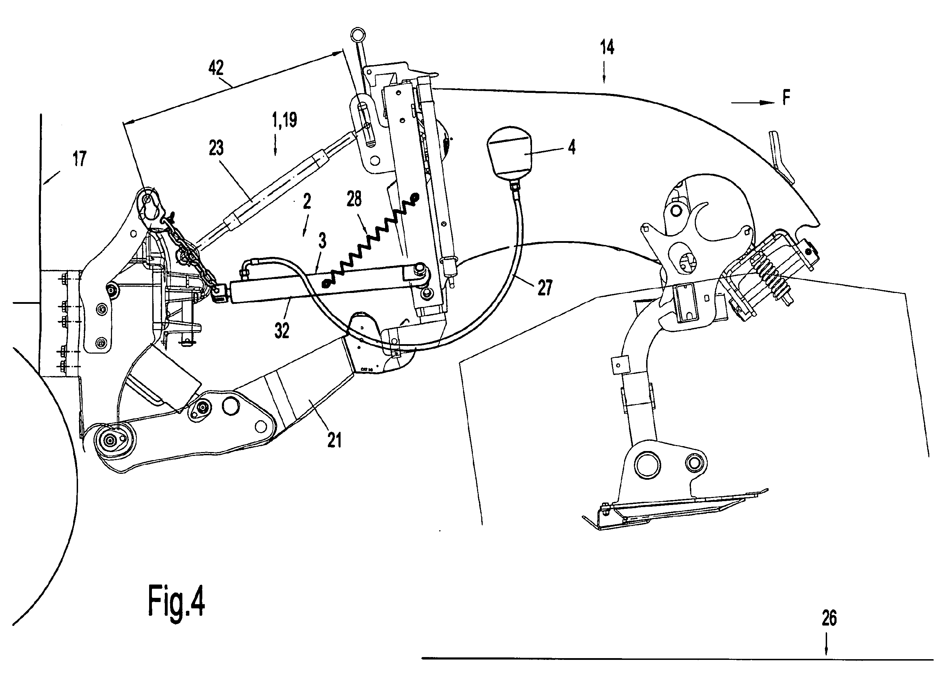

Fig.4 zeigt das Mähwerk 14 in vom Boden 26 abgehobener Stellung. Dabei ist es von dem Dreipunkthubwerk entsprechend angehoben worden, wodurch sich der Abstand zwischen dem vorsatzgeräteseitigen Anschlagpunkt 6 und dem trägerfahrzeugseitigen Anschlagpunkt 7 verkleinert hat. Dabei ist die Kolbenstange 29 infolge des im kolbenstangenseitigen Druckraum 31 anstehenden Drucks des Druckspeichers bis auf Anschlag in das Zylindergehäuse 32 eingefahren und das biegeschlaffe Zugkraftübertragungsglied 5 bzw. die Gliederkette 8 ist entspannt und hängt schlaff durch. In diesem Zustand kann das Anschlussglied 11 an den vorsatzgeräteseitigen Anschlagpunkt 6 spannungsfrei an- bzw. abgekoppelt bzw. ein- oder ausgehängt werden.

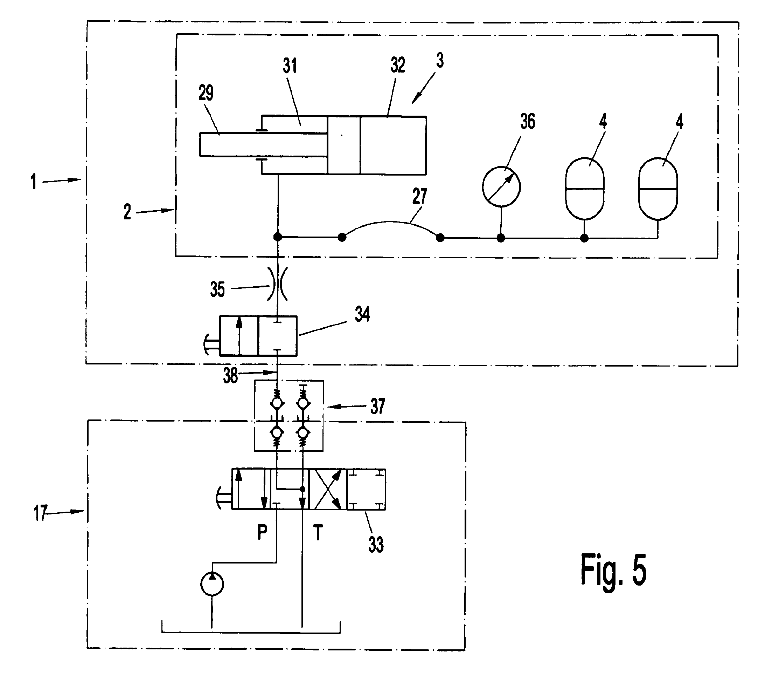

Fig.5 zeigt ein Ausführungsbeispiel für einen hydraulischen Schaltplan zum Aufprägen oder Ablassen des hydropneumatischen Vorspanndrucks. Der hydraulische Anschluss erfolgt über eine Zapfstelle 37 des Trägerfahrzeugs 17. Mit einem Wegeventil 33 als Steuerventil des Trägerfahrzeugs 17 kann über eine Blende 35 der hydraulische bzw. der hydropneumatische Vorspanndruck bei geöffnetem Absperrventil 34 den Druckspeichern 4 aufgeprägt werden bzw. auch umgekehrt abgelassen werden. Bei geschlossenem Absperrventil 34 kann der hydropneumatische Vorspanndruck dauerhaft eingespannt werden, so dass die hydraulische Verbindungsleitung 38 an der Zapfstelle 37 abgekoppelt werden kann. Von dem Manometer 36 kann der aufgeprägte Vorspanndruck des hydropneumatischen Entlastungssystems1 abgelesen werden.

Diese hier dargestellten Ausführungsformen sind als exemplarische Lösungen anzusehen. Erfindungswesentlich hingegen ist, dass das hydropneumatische Entlastungssystem 1 für eine die hier dargestellten Ausführungsformen als exemplarische Lösungen anzusehen sind. Erfindungswesentlich hingegen ist, dass insbesondere für Vorsatzgeräte bzw. Frontmähwerke, das hydropneumatische Entlastungssystem 1 vollständig oder zumindest größtenteils, und gemeint ist die Kolben-/Zylindereinheit 3, in den Bauraum des Dreipunkthubwerks 30, also zwischen der Kupplungseinrichtung 39 des Vorsatzgerätes 14 und dem Trägerfahrzeug 17 untergebracht ist, und das sich der oder die hydropneumatischen Kraftspeicher 2 und damit die Vorspannkraft Vv an einem festen Punkt des Trägerfahrzeugs abstützt.

### Bezugszeichenliste

- 1: hydropneumatisches Entlastungssystem
- 2: hydropneumatische Kraftspeicher
- 3: Kolben/Zylindereinheit Hydraulikzylinder
- 4: hydropneumatischer Druckspeicher
- 5: biegeschlaffes Zugkraftübertragungsglied
- 6: vorsatzgeräteseitigen Anschlagpunkt
- 7: trägerfahrzeugseitigen Anschlagpunkt
- 8: Gliederkette
- 9: Abstecklänge
- 10: vorsatzgeräteseitiges Ende
- 11: Anschlussglied
- 12: Aufnahmeöffnung
- 13: Zugkraftwirkungslinie
- 14: Vorsatz- Anbaugerät, Frontmähwerk
- 15: Unterlenkeranschlusspunkt
- 16: Oberlenkeranschlusspunkt
- 17: Trägerfahrzeug, Traktor
- 18: Flanschverbindung
- 19: Dreipunkthubwerk
- 20: Hubzylinder
- 21: Unterlenker
- 22: Greifklauen
- 23: Oberlenker
- 24: starre Verbindungslasche
- 25: Gleitkufe
- 26: Boden
- 27: flexible Schlauchleitung
- 28: Zugfeder
- 29: Kolbenstange
- 30: Bauraum des Dreipunkthubwerks
- 31: Kolbenstangendruckraum
- 32: Zylindergehäuse
- 33: traktorseitiges Wegeventil
- 34: Absperrventil
- 35: Blende
- 36: Manometer
- 37: Zapfstelle
- 38: hydraulische Versorgungsleitung
- 39: Kupplungseinrichtung
- 40: Verstellspindel
- 41: Langlochglied
- 42: Einbaulänge
- A: Teilachslast
- B: Bodenstützkraft
- F: Fahrtrichtung
- Fv: Vorspannkraft
- G: Gewichtskraft
- S: Schwerpunkt
- Xᵥ,X'ᵥ: Maß

## Patentansprüche

1. Trägerfahrzeug (17) mit einem als Dreipunkthubwerk (19) ausgeführten Fontanbau, zur Aufnahme eines Vorsatz- oder Anbaugerätes (14) mit einem hydropneumatischen Entlastungssystem (1) als Kraftspeicher für die Minderung des Anteils der Gewichtskraft, welche über das Vorsatz- oder Anbaugerät (14) in der Arbeitsstellung am Boden abgestützt wird, **dadurch gekennzeichnet, dass** das Entlastungssystem (1), bestehend aus einem hydropneumatischen Kraftspeicher (2), mit einer Kolben/Zylindereinheit (3) und einem hydropneumatischen Druckspeicher (4), sowie einem biegeschlaffen Zugkraftübertragungsglied (5), einerseits direkt am Vorsatz- oder Anbaugerät (14) oder dessen Kupplungseinrichtung (39) und anderseits direkt am Trägerfahrzeug (17) im Bauraum (30) des Dreipunkthubwerkes (19) oberhalb der Unterlenker (21) angeschlagen ist.

2. Trägerfahrzeug (17) nach Anspruch 1, **dadurch gekennzeichnet, dass** die Kolben/Zylindereinheit (3) als Differentialkolbenzylinder ausgebildet ist und wobei der Kolbenstangendruckraum (31) druckbeaufschlagbar ist.

3. Trägerfahrzeug (17) nach Anspruch 1, **dadurch gekennzeichnet, dass** der hydropneumatische Kraftspeicher (2) an seinem freien vorsatzgeräteseitigem Ende (10) ein Anschlussglied (11) mit einer Aufnahmeöffnung (12) zum Einhängen an den trägerfahrzeugseitigen Anschlagpunkt (7) aufweist.

4. Trägerfahrzeug (17) nach Anspruch 1 oder 2, **dadurch gekennzeichnet, dass** der hydropneumatische Kraftspeicher (2) an einem als Kugelgelenk ausgeführten vorsatzgeräteseitigen Anschlagpunkt (6) oder dessen Kupplungseinrichtung (39) gelenkig angeschlagen ist.

5. Trägerfahrzeug (17) nach einem der Ansprüche 1 bis 4, **dadurch gekennzeichnet, dass** das biegeschlaffe Zugkraftübertragungsglied (5) als Gliederkette (8) ausgeführt ist.

6. Trägerfahrzeug (17) nach Anspruch 5, **dadurch gekennzeichnet, dass** die Gliederkette (8) in ihrer Abstecklänge (9) veränderbar ist.

7. Trägerfahrzeug (17) nach einem der Ansprüche 1 bis 6, **dadurch gekennzeichnet, dass** das biegeschlaffe Zugkraftübertragungsglied (5) an einem festen trägerfahrzeugseitigen Anschlagpunkt (7) angeschlagen ist.

8. Trägerfahrzeug (17) nach einem der Ansprüche 1 bis 7, **dadurch gekennzeichnet, dass** das biegeschlaffe Zugkraftübertragungsglied (5) an seinem freien vorsatzgeräteseitigem Ende (10) ein Anschlussglied (11) mit einer Aufnahmeöffnung (12) zum Einhängen an den trägerfahrzeugseitigen Anschlagpunkt aufweist.

9. Trägerfahrzeug (17) nach einem der Ansprüche 1 bis 8 **dadurch gekennzeichnet, dass** das biegeschlaffe Zugkraftübertragungsglied (5) Zugkraft (Fv) übertragend in der Zugkraftwirkungslinie (13) der Kolben/Zylindereinheit (3) liegt.

10. Trägerfahrzeug (17) nach einem der Ansprüche 8 oder 9, **dadurch gekennzeichnet, dass** das Anschlussglied (11) eine schlüssellochförmige Aufnahmeöffnung (12) zur Schnellkupplung aufweist.

11. Trägerfahrzeug (17) nach einem der Ansprüche 1 bis 10, **dadurch gekennzeichnet, dass** die Kolben/Zylindereinheit (3) einen Anschlagpunkt für eine Zugfeder (28) aufweist, welche im biegeschlaffen und zugkraftfreien Zustand des Zugkraftübertragungsgliedes (5) die Kolben/Zylindereinheit (3) gegen herabfallen sichert.

## Claims

1. A carrier vehicle (17) comprising a frontal attachment in the form of a three-point lifting mechanism (19) for receiving a front-mounted or attachment device (14) with a hydropneumatic load relief system (1) as a force storage means for reducing the component of the force of gravity, which is supported on the ground in the working position by way of the front-mounted or attachment device (14), **characterised in that** the load-relief system (1) comprising a hydropneumatic force storage means (2), with a piston/cylinder unit (3) and a hydropneumatic pressure storage means (4), as well as a flexible force transmission member (5), is fixed on the one hand directly to the front-mounted or attachment device (14) or its coupling device (39) and on the other hand directly to the carrier vehicle (17) in the structural space (30) of the three-point lifting mechanism (19) above the lower link (21).

2. A carrier vehicle (17) according to claim 1 **characterised in that** the piston/cylinder unit (3) is in the form of a differential piston cylinder and wherein the piston rod pressure chamber (31) can be subjected to pressure.

3. A carrier vehicle (17) according to claim 1 **characterised in that** the hydropneumatic force storage means (2) at its free end (10) towards the front-mounted device has a connecting member (11) with a receiving opening (12) for suspension to the fixing point (7) at the carrier vehicle side.

4. A carrier vehicle (17) according to claim 1 or claim 2 **characterised in that** the hydropneumatic force storage means (2) is pivotably mounted to a fixing point (6) which is in the form of a ball joint and which is towards the front-mounted device or the coupling device (39) thereof.

5. A carrier vehicle (17) according to one of claims 1 to 4 **characterised in that** the flexible force transmission member (5) is in the form of a link chain (8).

6. A carrier vehicle (17) according to claim 5 **characterised in that** the link chain (8) is variable in its connecting length (9).

7. A carrier vehicle (17) according to one of claims 1 to 6 **characterised in that** the flexible force transmission member (5) is mounted to a fixed fixing point (7) at the carrier vehicle side.

8. A carrier vehicle (17) according to one of claims 1 to 7 **characterised in that** flexible force transmission member (5) at its free end (10) towards the front-mounted device has a connecting member (11) with a receiving opening (12) for suspension to the fixing point (7) at the carrier vehicle side.

9. A carrier vehicle (17) according to one of claims 1 to 8 **characterised in that** the flexible force transmission member (5) is disposed in the line of action of the tensile force (13) of the piston/cylinder unit (3), to transmit tensile force (Fv).

10. A carrier vehicle (17) according to one of claims 8 and 9 **characterised in that** the connecting member (11) has a keyhole-shaped receiving opening (12) for quick-action coupling.

11. A carrier vehicle (17) according to one of claims 1 to 10 **characterised in that** the piston/cylinder unit (3) has a fixing point for a tension spring (28) which in the flexible and tensile force-free state of the force transmission member (5) secures the piston-cylinder unit (3) from falling down.

## Revendications

1. Véhicule porteur (17) équipé d'un accessoire frontal réalisé sous la forme d'un dispositif de levage à trois points (19) et destiné à recevoir un outil frontal ou porté (14) avec un système de délestage hydropneumatique (1) servant d'accumulateur de force pour diminuer la part du poids par lequel l'outil frontal ou porté (14) prend appui sur le sol dans la position de travail, **caractérisé en ce que** le système de délestage (1), composé d'un accumulateur de force hydropneumatique (2) comprenant une unité piston/cylindre (3) et un accumulateur de pression hydropneumatique (4) ainsi que d'un organe de transmission de force de traction souple en flexion (5), est attaché d'un côté directement à l'outil frontal ou porté (14) ou à son dispositif d'accouplement (39) et, de l'autre côté, directement au véhicule porteur (17) dans l'espace de construction (30) du dispositif de levage à trois points (19) au-dessus du bras de relevage (21).

2. Véhicule porteur (17) selon la revendication 1, **caractérisé en ce que** l'unité piston/cylindre (3) est réalisée sous la forme d'un vérin à piston différentiel et la chambre de pression de tige de piston (31) peut être mise sous pression.

3. Véhicule porteur (17) selon la revendication 1, **caractérisé en ce que** l'accumulateur de force hydropneumatique (2) présente, à son extrémité libre côté outil frontal (10), un organe de raccordement (11) avec une ouverture de réception (12) pour l'accrochage au point d'ancrage (7) côté véhicule porteur.

4. Véhicule porteur (17) selon la revendication 1 ou 2, **caractérisé en ce que** l'accumulateur de force hydropneumatique (2) est attaché de manière articulée à un point d'ancrage (6) côté outil frontal réalisé sous la forme d'une rotule ou à son dispositif d'accouplement (39).

5. Véhicule porteur (17) selon une des revendications 1 à 4, **caractérisé en ce que** l'organe de transmission de force de traction souple en flexion (5) est réalisé sous la forme d'une chaîne à maillons (8).

6. Véhicule porteur (17) selon la revendication 5, **caractérisé en ce que** la chaîne à maillons (8) est modifiable dans sa longueur de montage (9).

7. Véhicule porteur (17) selon une des revendications 1 à 6, **caractérisé en ce que** l'organe de transmission de force de traction souple en flexion (5) est attaché à un point d'ancrage (7) fixe côté véhicule porteur.

8. Véhicule porteur (17) selon une des revendications 1 à 7, **caractérisé en ce que** l'organe de transmission de force de traction souple en flexion (5) présente à son extrémité libre côté outil frontal (10) un organe de raccordement (11) avec une ouverture de réception (12) pour l'accrochage au point d'ancrage côté véhicule porteur.

9. Véhicule porteur (17) selon une des revendications 1 à 8, **caractérisé en ce que** l'organe de transmission de force de traction souple en flexion (5) est disposé de manière à transmettre la force de traction (Fv) dans la ligne de force de traction (13) de l'unité piston/cylindre (3).

10. Véhicule porteur (17) selon une des revendications 8 ou 9, **caractérisé en ce que** l'organe de raccordement (11) présente une ouverture de réception (12) en forme de trou de serrure pour l'accouplement rapide.

11. Véhicule porteur (17) selon une des revendications 1 à 10, **caractérisé en ce que** l'unité piston/cylindre (3) présente un point d'ancrage pour un ressort de traction (28), lequel empêche l'unité piston/cylindre (3) de tomber dans l'état où l'organe de transmission de force de traction (5) est souple en flexion et libre de force de traction.
